# FASCICULE DE BREVET EUROPEEN

(11) **EP 2 168 018 B1**
(45) Date de publication et mention de la délivrance du brevet: **02.05.2012**
(21) Numéro de dépôt: 08774589.9
(22) Date de dépôt: 01.07.2008
(51) Int. Cl.: G05B 19/42

(54) **PROCÉDÉ D'ÉDITION DE MOUVEMENTS D'UN ROBOT**
VERFAHREN ZUM EDITIEREN VON BEWEGUNGEN EINES ROBOTERS
METHOD OF EDITING MOVEMENTS OF A ROBOT

(30) Priorité: 04.07.2007 FR 0704826
(43) Date de publication de la demande: 31.03.2010
(73) Titulaire: Aldebaran Robotics S.A., 75006 Paris (FR)
(72) Inventeur: MAISONNIER, Bruno, F-75006 Paris (FR); MONCEAUX, Jérôme, F-75005 Paris (FR)
(74) Mandataire: Nguyen Van Yen, Christian
(86) Numéro de dépôt international: PCT/EP2008/058443
(87) Numéro de publication internationale: WO 2009/004004

(56) Documents cités:
- EP-A1- 1 321 248
- US-A- 5 231 693
- US-A1- 2004 012 593
- YOSHIHIRO KUROKI ET AL: "Motion Creating System for a Small Biped Entertainment Robot", PROCEEDINGS OF THE 2003 IEEE/RSJ INTERNATIONAL CONFERENCE ON INTELLIGENT ROBOTS AND SYSTEMS. (IROS 2003). LAS VEGAS, NV, OCT. 27 - 31, 2003; [IEEE/RSJ INTERNATIONAL CONFERENCE ON INTELLIGENT ROBOTS AND SYSTEMS], NEW YORK, NY : IEEE, US, 27 October 2003 (2003-10-27), pages 1394-1399, XP009137741, ISBN: 978-0-7803-7860-5

## Description

L'invention se rapporte à un procédé d'édition de mouvements d'un robot à partir d'un équipement informatique apte à communiquer avec le robot.

L'invention se rapporte également à un système d'édition de mouvements d'un robot comprenant un équipement informatique apte à communiquer avec le robot.

L'invention se rapporte également à un programme d'ordinateur qui, à l'exécution, lorsqu'il est chargé sur un équipement informatique apte à communiquer avec un robot, permet l'édition de mouvements du robot.

On connaît notamment des procédés d'édition de mouvements d'un robot. De tels procédés permettent à un développeur ou à un utilisateur d'éditer des mouvements que le robot pourra par la suite reproduire. Il peut par exemple s'agir d'un mouvement de marche, de danse, ou plus simplement au fait de lever un bras ou de saluer.

Dans un tel procédé connu, un programme d'ordinateur est chargé sur l'équipement Informatique apte à communiquer avec le robot. Ce programme d'ordinateur génère par exemple une interface qui permet de modifier la position d'une ou plusieurs articulations du robot par l'intermédiaire de moteurs associés à ces articulations. L'interface peut apparaître sur un écran de l'équipement informatique sous la forme d'un curseur à déplacer entre deux bornes, ou d'une valeur numérique à modifier. La modification de la position du curseur ou de la valeur numérique permet de modifier la position d'un moteur du robot. Ce robot peut être soit un robot réel séparé de l'équipement informatique, soit un robot virtuel affiché par exemple sur un écran de l'équipement informatique.

Dans les procédés connus, on définit donc, grâce au programme d'ordinateur chargé sur l'équipement informatique, une pluralité de positions pour le robot.

Ces différentes positions sont alors intégrées dans une séquence temporelle de positions, appelée en langue anglaise « timeline ». Une telle séquence temporelle de positions comprend une série de positions de référence appelées en langue anglaise « keyframe », qui sont liées entre elles par une transition dans le temps, de sorte à définir la séquence temporelle de positions. Dans la séquence temporelle de positions, les différentes positions à atteindre par le robot, et donc les différentes positions des moteurs du robot, sont générées comme mentionné ci-dessus à partir de l'interface affichée sur l'équipement informatique, par exemple au moyen d'un curseur.

Un tel procédé d'édition à partir d'un curseur affiché sur l'équipement informatique a l'avantage de permettre un réglage fin des positions de référence dans la séquence temporelle de positions.

Toutefois, un tel procédé est fastidieux pour définir des grands mouvements du robot et donc un réglage grossier des positions. En particulier, si les déplacements du robot sont définis à partir d'un curseur actionnant un moteur, il est compliqué de manipuler les curseurs de chacun des moteurs à actionner pour un mouvement ample. Les procédés d'édition de mouvements d'un robot connus ne permettent donc pas à un utilisateur d'éditer une grande gamme de mouvements, et ce de façon simple.

Le problème résolu par l'invention est donc de faciliter l'édition d'une grande gamme de mouvements d'un robot.

Ce problème est résolu, selon un premier aspect de l'invention, par un procédé d'édition de mouvements d'un robot à partir d'un équipement informatique apte à communiquer avec le robot, le procédé comprenant des étapes dans lesquelles :
- on génère une pluralité de positions de références du robot ;
- on génère une séquence temporelle de positions, la séquence temporelle de positions comprenant la pluralité de positions de références, et des mouvements de transition entre deux positions de référence successives ;
   dans lequel l'étape consistant à générer la pluralité de positions de référence comprend des étapes dans lesquelles :
- on génère une position de référence de la séquence temporelle de positions par des moyens de déplacement de l'équipement informatique, les moyens de déplacement provoquant le déplacement du robot, de sorte à définir la position de référence ;
   l'étape consistant à générer la pluralité de positions de référence comprenant en outre une étape dans laquelle
- on génère en outre la position de référence en déplaçant le robot dans une position souhaitée ;
- on enregistre, sur l'équipement informatique, des caractéristiques de la position souhaitée,
- on définit la position de référence à partir des caractéristiques de la position souhaitée.

Grâce à l'invention, un utilisateur peut donc définir les positions de référence d'abord par un réglage grossier de la position du robot en déplaçant le robot réellement ou virtuellement, puis par un réglage fin grâce aux moyens de déplacement de l'équipement informatique.

Ceci permet de générer simplement un grand nombre de positions du robot.

Selon un mode de réalisation, l'étape consistant à générer la pluralité de positions de référence comprend en outre une étape dans laquelle :
- on affiche une représentation graphique de l'évolution temporelle des caractéristiques d'au moins une articulation du robot en fonction de la séquence temporelle de positions ;
- on modifie la représentation graphique de l'évolution temporelle de sorte à modifier la séquence temporelle de positions ;
- on génère une nouvelle séquence temporelle de positions en fonction des modifications de la représentation graphique.

Selon un mode de réalisation, le robot comprend une pluralité d'articulations, et le procédé comprend une étape dans laquelle :
- on génère une pluralité de séquences temporelles de positions chacune des séquences temporelles de positions comprenant des positions de référence correspondant à des positions d'une partie des articulations parmi la pluralité d'articulations.

Dans ce mode de réalisation, les séquences temporelles de positions de la pluralité de séquences temporelles de positions sont lues simultanément, de sorte à provoquer un mouvement du robot pour la pluralité d'articulations.

Selon un mode de réalisation, le robot est un robot réel.

Selon un autre mode de réalisation, le robot est un robot virtuel affiché sur un écran de l'équipement informatique.

Dans ce cas, le robot virtuel est généré à partir d'un robot réel et d'un simulateur, le simulateur étant agencé de sorte que chaque mouvement du robot réel soit susceptible de provoquer le même mouvement pour le robot virtuel, et chaque mouvement du robot virtuel soit susceptible de provoquer le même mouvement pour le robot réel.

Le problème susmentionné est également résolu, selon un deuxième aspect de l'invention, par un programme d'ordinateur qui, à l'exécution, lorsqu'il est chargé sur un équipement informatique apte à communiquer avec un robot, permet l'édition de mouvements du robot selon le procédé précédemment décrit.

L'invention se rapporte également à un système d'édition de mouvements d'un robot comprenant un équipement informatique apte à communiquer avec le robot, le système comprenant des premiers moyens pour générer une pluralité de positions de référence du robot ;
- des deuxième moyens pour générer une séquence temporelle de positions, la séquence temporelle de positions comprenant la pluralité de positions de références, et des mouvements entre deux positions de référence successives;
- des moyens de déplacement aptes à provoquer le déplacement d'au moins un moteur du robot,
- des troisième moyens pour générer une position de référence de la séquence temporelle de positions à partir des moyens de déplacement de l'équipement informatique de sorte à définir la position de référence ;
- des quatrième moyens pour générer en outre la position de référence en déplaçant le robot dans une position souhaitée, pour enregistrer, sur l'équipement informatique, les caractéristiques de la position souhaitée, et pour définir la position de référence à partir des caractéristiques de la position souhaitée.

Selon un mode de réalisation du système susmentionné, le système comprend des moyens pour afficher une représentation graphique de l'évolution temporelle des caractéristiques d'au moins un moteur du robot en fonction de la séquence temporelle de positions ; des moyens pour modifier la représentation graphique de l'évolution temporelle de sorte à modifier la séquence temporelle de positions et des moyens pour modifier une nouvelle séquence temporelle de positions en fonction des modifications de la représentation graphique.

Selon un mode de réalisation, le robot comprend une pluralité d'articulations, et le système comprend des moyens pour générer une pluralité de séquences temporelles de positions, chacune des séquences temporelles de positions comprenant des positions de référence correspondant à des positions d'une partie des articulations parmi la pluralité d'articulations.

Dans ce cas, le système comprend des moyens pour lire simultanément les séquences temporelles de positions de la pluralité de séquences temporelles de positions de sorte à provoquer un mouvement du robot selon la pluralité d'articulations.

On décrit maintenant un mode de réalisation de l'invention en référence aux figures annexées dans lesquelles :
FIG. 1 représente un système selon l'invention ;
FIG. 2 représente une première interface pour la mise en oeuvre du procédé selon l'invention ;
FIG. 3 représente une deuxième interface comprenant une séquence temporelle de positions pour la mise en oeuvre du procédé selon l'invention ;
FIG. 4 représente une troisième interface pour la mise en oeuvre du procédé selon l'invention.

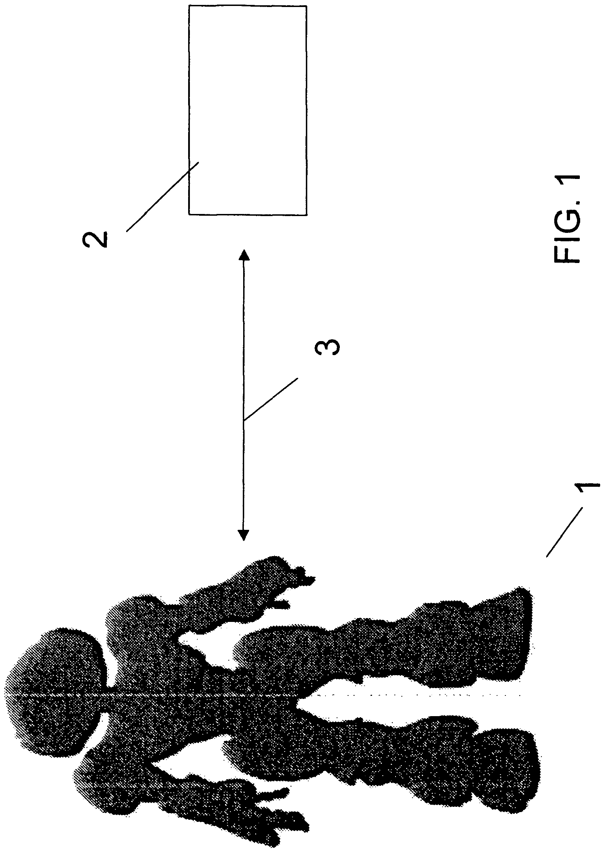

La FIG. 1 représente de façon générale un robot réel 1. L'invention permet d'éditer des mouvements du robot réel 1. Le robot réel 1 comprend des moteurs, au niveau de ses articulations, et des capteurs permettant de déterminer la position des moteurs. Le robot réel 1 est apte à communiquer, c'est-à-dire à échanger des données avec un équipement informatique 2 par des moyens de communication 3. Ces moyens de communication 3 sont par exemple du type réseau sans fil Wifi.

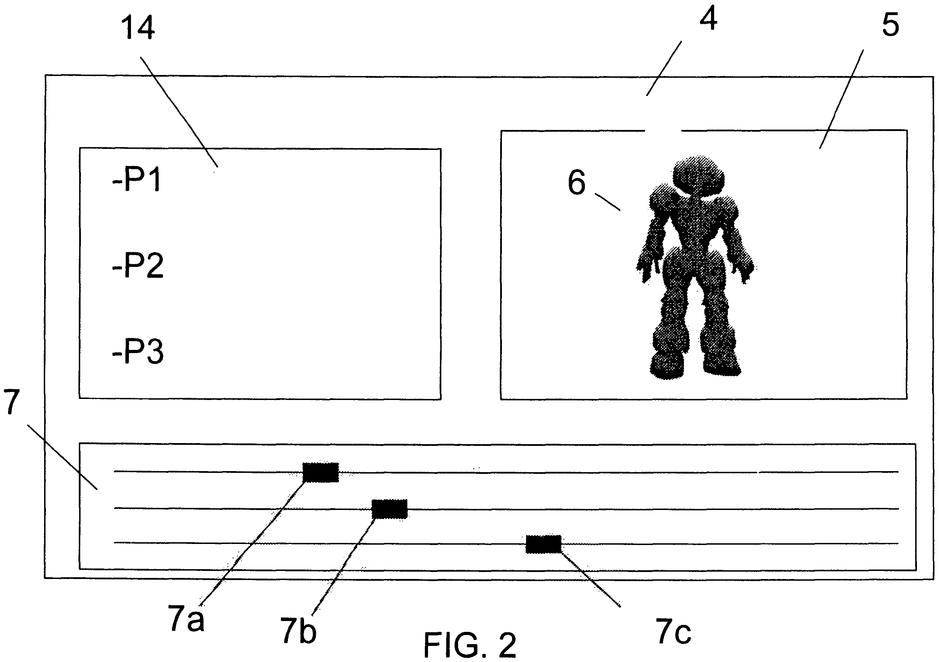

La FIG. 2 représente une première interface 4 pour la mise en oeuvre du procédé d'édition de mouvements d'un robot selon l'invention. Cette interface 4 est générée sur un écran de l'équipement informatique 2 lorsque l'on charge un programme d'ordinateur sur l'équipement informatique 2.

La première interface 4 comprend une fenêtre 5 fournissant une représentation virtuelle sous la forme d'un robot virtuel 6 du robot réel 1. Le robot virtuel 6 est réalisée par simulation du robot réel 1 par un simulateur. Le simulateur peut être activé ou désactivé, et permet de visualiser dans la fenêtre 5 les mouvements et les actions du robot réel 1, ainsi que les éventuelles lumières, sons ou paroles produits par le robot réel 1. Le simulateur intègre les lois de la physique, et fait par exemple que le robot tombe s'il est en déséquilibre, et provoque un contact lorsque le robot réel touche un objet. Afin de faciliter la définition des mouvements, le simulateur permet également de visualiser ce qu'une caméra intégrée au robot réel 1 voit. Ceci permet de définir les mouvements du robot réel 1 à partir du robot virtuel 6, tout en tenant compte de l'environnement du robot réel 1. Le simulateur est lié au robot réel 1 de sorte que tous les comportements du robot réel 1 peuvent s'effectuer sur le robot virtuel 6. Lorsque le simulateur est activé, un mouvement sur le robot virtuel 6 provoque le même mouvement sur le robot réel 1. De même, un mouvement sur le robot réel 1 provoque le même mouvement sur le robot virtuel 6. Plusieurs robots réels 1 peuvent également être représentés dans la fenêtre 5 sous la forme de plusieurs robots virtuels 6, même si les robots réels 1 ne sont pas physiquement proches, de sorte que les robots réels 1 peuvent être commandés de façon groupée et synchronisée à partir du simulateur.

Puisque le simulateur permet de commander indifféremment le robot réel 1 et le robot virtuel 6, la description de l'invention qui suit et les actions sur le robot sont applicables de façon identique au robot virtuel 6 et au robot réel 1. Lorsque l'utilisateur définit des mouvements complexes du robot dans lequel celui-ci risque de tomber, on préférera tout particulièrement l'utilisation du robot virtuel en désactivant au moins partiellement le simulateur pour ne pas endommager le robot réel 1.

Dans la suite de la description, on décrira des actions sur le robot réel 1, mais il est entendu que les mêmes actions peuvent être appliquées au robot virtuel 6.

La zone 7 de l'interface 1 comprend une pluralité de curseurs 7a, 7b, 7c susceptibles d'être déplacés par exemple grâce à une souris associée à l'équipement informatique 2. Chacun des curseurs définit une position d'un moteur du robot réel 1 et donc d'une articulation du robot réel 1. Lorsqu'un des curseurs est déplacé jusqu'à une certaine valeur, le moteur associé est déplacé en fonction du déplacement du curseur. Les curseurs 7a, 7b et 7c, correspondent donc à des mouvements d'un moteur au niveau d'une articulation du robot, par exemple respectivement aux moteurs de la tête, du coude, et de l'épaule.

Les curseurs 7a, 7b, et 7c, permettent un réglage fin de la position des moteurs associés.

Selon l'invention, il est également possible de définir une position du robot réel 1 en déplaçant, par exemple manuellement, le robot réel 1. Ce déplacement manuel définit une position souhaitée pour le robot. Cette position souhaitée est alors enregistrée par l'équipement informatique 2. Ce type de déplacement permet notamment une définition grossière des positions du robot, par exemple en faisant passer le bras du robot d'une position basse à une position haute par actionnement du moteur de l'épaule. Les changements de positions ou mouvements des curseurs 7a, 7b et 7c et du robot sont ainsi interdépendants ou liés.

Suite à ce déplacement grossier, un déplacement fin à l'aide des curseurs 7a, 7b et 7c précédemment décrits permet d'affiner la position du robot. La combinaison des possibilités de déplacements fins et grossiers décrits précédemment permet à un utilisateur d'éditer de façon simple un grand nombre de mouvements du robot.

Afin de simplifier encore la définition des positions du robot, l'interface 4 peut également comprendre une fenêtre 14 comprenant une liste de positions prédéfinies P1, P2, P3. A chacune de ces positions, sont associés les paramètres des articulations associés aux moteurs. En cliquant sur un élément de cette liste, par exemple à l'aide d'une souris, le robot prend la position définie par ces paramètres.

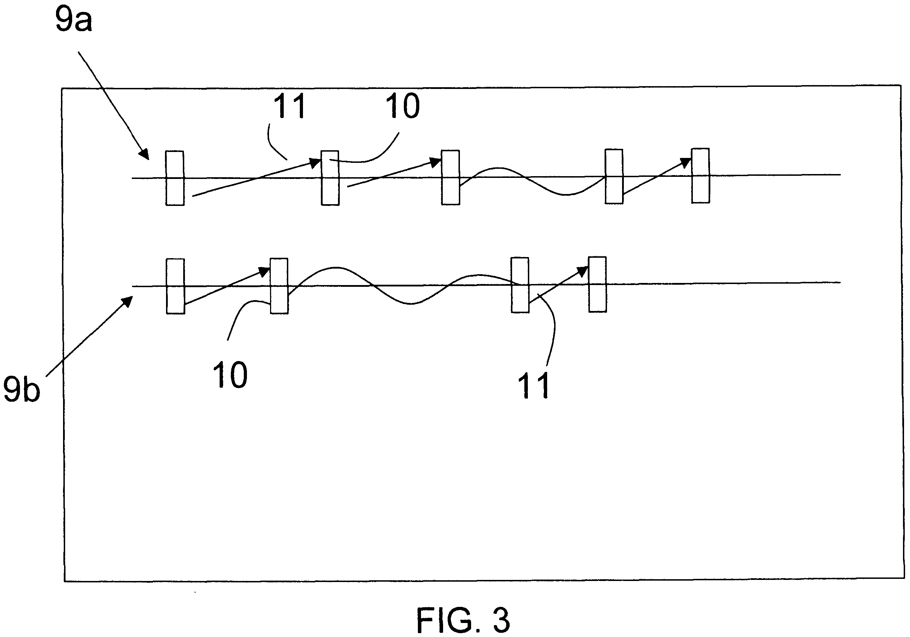

A partir de ces différents moyens de positionnement du robot, on définit des positions de référence du robot. Illustré FIG. 3, ces positions de références sont insérées dans une séquence temporelle de positions 9a, 9b comprenant des trames de référence 10. Chacune des trames de référence 10 correspond à une position de référence 10 du robot, c'est-à-dire à la définition des caractéristiques de chaque moteur du robot ou d'une partie des moteurs du robot.

Pour générer la séquence temporelle de position 9a, 9b à partir des positions de référence 10, on définit un mouvement correspondant à une transition 11 entre deux positions de référence 10. La transition peut être une transition linéaire, dans laquelle le mouvement de chaque articulation associée à un moteur est régulier et à vitesse constante entre les deux positions de référence 10. La transition peut également être une transition douce dans laquelle le mouvement présente une phase d'accélération puis de décélération de sorte que le mouvement global ne présente pas d'à coups à chaque position de référence. D'autres types de transition peuvent également être ajoutés et définis par un utilisateur.

Selon l'invention, des séquences temporelles de position différentes 9a et 9b peuvent être utilisées pour différents sous-ensembles de l'ensemble des moteurs et des articulations du robot. Par exemple, la séquence 9a peut correspondre aux mouvements des moteurs de la partie supérieure du robot comprenant notamment les épaules, les coudes et la tête, et la séquence 9b peut correspondre aux mouvements des moteurs de la partie inférieure du robot comprenant notamment les hanches, les genoux et les chevilles. De la sorte, on facilite grandement les possibilités de définition des mouvements du robot, puisqu'une trame de référence n'a pas à comprendre la définition des positions pour toutes les articulations, mais seulement une partie d'entre elles. En lançant les différentes séquences temporelles 9a, 9b de façon synchronisée, un mouvement de l'ensemble du robot est alors obtenu. Chacune des séquences 9a, 9b peut être activée ou désactivée, et lancée indépendamment des autres séquences. En cas de conflit entre deux séquences, c'est-à-dire lorsque, lors de la lecture de deux séquences distinctes, la même articulation doit prendre, au même instant, deux positions différentes, on peut soit prioriser une séquence sur une autre, soit procéder à une moyenne entre les différentes positions.

Il est également possible de préciser l'intervalle de temps entre deux trames de références et de copier les caractéristiques d'une trame dans une autre trame. Afin de vérifier que le mouvement du robot défini dans la séquence temporelle de positions correspond bien au mouvement souhaité, il est possible de jouer la séquence définie à l'aide d'une fonction de lecture de la séquence.

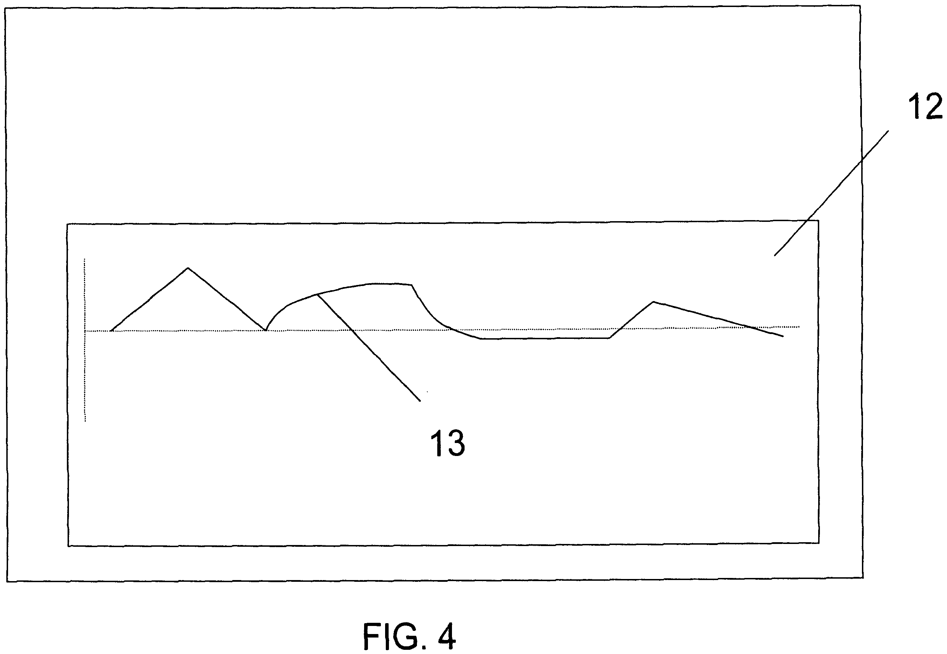

Lorsque la séquence temporelle de positions est définie, il est possible d'afficher la position d'une articulation particulière en fonction du temps. Une fenêtre 12 réalisant un tel affichage est illustrée FIG. 4. Sur la FIG. 4, la fenêtre 12 comprend un diagramme 13 illustrant l'évolution de la position d'une articulation associée à un moteur du robot. Le diagramme 13 est éditable et peut être modifié à l'aide d'une souris associée à l'équipement informatique 2. L'édition du diagramme 13 permet également un réglage fin des transitions entre deux positions de référence, ainsi qu'un réglage fin des positions de l'articulation au sein d'une trame de référence, pour définir une nouvelle position de référence.

L'ensemble des fonctions définies ci-dessus permet alors une édition particulièrement simple des mouvements du robot, même par un utilisateur novice dans la programmation robotique. En outre, chacune des positions ou des séquences temporelles de positions définies grâce à l'invention peut, après avoir été mise en mémoire, être échangée par des utilisateurs, de sorte qu'une communauté de nombreux utilisateurs peut améliorer l'édition des mouvements du robot, chacun des utilisateurs de la communauté étant susceptible d'utiliser les mouvements édités par les autres utilisateurs de la communauté.

## Revendications

1. Procédé d'édition de mouvements d'un robot (1, 6) à partir d'un équipement informatique (2) apte à communiquer avec le robot, le procédé comprenant des étapes dans lesquelles :
- on génère une pluralité de positions de références (10) du robot ;
- on génère au moins une séquence temporelle de positions (9a, 9b), la séquence temporelle de positions comprenant la pluralité de positions de référence (10), et des mouvements de transition (11) entre deux positions de référence successives ;
**caractérisé en ce que** l'on rend interdépendant le robot et des moyens de déplacement (7a, 7b, 7c), compris dans l'équipement informatique et provoquant le déplacement du robot,
et **en ce que** le robot comprend un robot réel et éventuellement un robot virtuel affiché sur un écran de l'équipement informatique.

2. Procédé selon la revendication 1, dans lequel l'étape consistant à générer la pluralité de positions de référence comprend une étape dans laquelle on génère une position de référence de la séquence temporelle de positions par les moyens de déplacement (7a, 7b, 7c) compris dans l'équipement informatique, les moyens de déplacement provoquant le déplacement du robot, de sorte à définir la position de référence.

3. Procédé selon la revendication 2, dans lequel l'étape consistant à générer la pluralité de positions de référence comprend en outre une étape dans laquelle
- on génère en outre la position de référence en déplaçant le robot dans une position souhaitée ;
- on enregistre, sur l'équipement informatique, des caractéristiques de la position souhaitée, et
- on définit la position de référence à partir des caractéristiques de la position souhaité ;

4. Procédé selon l'une revendication 1 à 3 dans lequel l'étape consistant à générer la pluralité de positions de référence comprend en outre une étape dans laquelle :
- on affiche une représentation graphique (13) de l'évolution temporelle des caractéristiques d'au moins une articulation du robot en fonction de la séquence temporelle de positions ;
- on modifie la représentation graphique de l'évolution temporelle de sorte à modifier la séquence temporelle de positions ;
- on génère une nouvelle séquence temporelle de positions en fonction des modifications de la représentation graphique.

5. Procédé selon l'une des revendications précédentes, dans lequel le robot comprend une pluralité d'articulations, et dans lequel
- on génère une pluralité de séquences temporelles de positions (9a, 9b), chacune des séquences temporelles de positions comprenant des positions de référence correspondant à des positions d'une partie des articulations parmi la pluralité d'articulations.

6. Procédé selon la revendication précédente dans lequel les séquences temporelles de positions de la pluralité de séquences temporelles de positions sont lues simultanément, de sorte à provoquer un mouvement du robot pour la pluralité d'articulations.

7. Procédé selon la revendication précédente dans lequel le robot virtuel est généré à partir d'un robot réel et d'un simulateur, le simulateur étant agencé de sorte que chaque mouvement du robot réel soit susceptible de provoquer le même mouvement pour le robot virtuel, et chaque mouvement du robot virtuel soit susceptible de provoquer le même mouvement pour le robot réel.

8. Système d'édition de mouvements d'un robot comprenant un équipement informatique apte à communiquer avec le robot, le système comprenant :
- des premiers moyens pour générer une pluralité de positions de référence du robot ;
- des deuxième moyens pour générer une séquence temporelle de positions, la séquence comprenant la pluralité de positions de référence, le mouvement du robot entre deux positions de référence étant généré à partir d'une interpolation ;
- des moyens de déplacement (7a, 7b, 7c) aptes à provoquer un déplacement du robot, les moyens de déplacement et le robot étant interdépendants ;
le robot comprenant un robot réel et éventuellement un robot virtuel affiché sur un écran de l'équipement informatique.

9. Système selon la revendication 8, comprenant, en outre, des troisièmes moyens pour générer une position de référence de la séquence temporelle de positions à partir des moyens de déplacement compris dans l'équipement informatique de sorte à définir la position de référence.

10. Système selon la revendication 9, comprenant, en outre, des quatrième moyens pour générer en outre la position de référence en déplaçant le robot dans une position souhaitée, pour enregistrer, sur l'équipement informatique, les caractéristiques de la position souhaitée, et pour définir la position de référence à partir des caractéristiques de la position souhaitée ;

11. Système selon l'une des revendications 8 à 10 comprenant des moyens pour afficher une représentation graphique de l'évolution temporelle des caractéristiques d'au moins un moteur du robot en fonction de la séquence temporelle de positions ; des moyens pour modifier la représentation graphique de l'évolution temporelle de sorte à modifier la séquence temporelle de positions et des moyens pour modifier une nouvelle séquence temporelle de positions en fonction des modifications de la représentation graphique.

12. Système selon l'une des revendications 8 à 11 dans lequel le robot comprend une pluralité d'articulations, et dans lequel le système comprend des moyens pour générer une pluralité de séquences temporelles de positions, chacune des séquences temporelles de positions comprenant des positions de référence correspondant à des positions d'une partie des articulations parmi la pluralité d'articulations.

13. Système selon la revendication précédente, comprenant des moyens pour lire simultanément les séquences temporelles de positions de la pluralité de séquences temporelles de positions de sorte à provoquer un mouvement du robot selon la pluralité d'articulations.

14. Programme d'ordinateur qui, à l'exécution, lorsqu'il est chargé sur un équipement informatique apte à communiquer avec un robot, permet l'édition de mouvements du robot selon l'une quelconque des revendications 1 à 7.

## Claims

1. A method for editing the movements of a robot (1, 6) on the basis of computing equipment (2) that is able to communicate with said robot, said method comprising the following steps:
- generating a plurality of reference positions (10) of said robot;
- generating at least one time sequence of positions (9a, 9b), said time sequence of positions comprising the plurality of reference positions (10), and transition movements (11) between two successive reference positions;
**characterised in that** the robot and displacement means (7a, 7b, 7c), which are included in the computing equipment and cause the displacement of the robot, are made interdependent,
and **in that** the robot comprises a real robot and possibly a virtual robot displayed on a screen of the computing equipment.

2. The method according to claim 1, wherein the step of generating the plurality of reference positions comprises a step of generating a reference position of the time sequence of positions by the displacement means (7a, 7b, 7c) that are included in the computing equipment, said displacement means causing the displacement of the robot so as to define the reference position.

3. The method according to claim 2, wherein the step of generating the plurality of reference positions further comprises a step of:
- further generating the reference position by displacing the robot into a required position;
- recording with the computing equipment the characteristics of the required position, and
- defining the reference position on the basis of the characteristics of the required position.

4. The method according to any one of claims 1 to 3, wherein the step of generating the plurality of reference positions further comprises a step of:
- displaying a graphical representation (13) of the temporal evolution of the characteristics of at least one joint of the robot as a function of the time sequence of positions;
- modifying the graphical representation of the time evolution so as to modify the time sequence of positions;
- generating a new time sequence of positions as a function of the modifications to the graphical representation.

5. The method according to any one of the preceding claims, wherein the robot comprises a plurality of joints, and wherein:
- a plurality of time sequences of positions (9a, 9b) is generated, each of said time sequences of positions comprising reference positions that correspond to the positions of some of the joints among the plurality of joints.

6. The method according to the preceding claim, wherein the time sequences of positions of the plurality of time sequences of positions are read simultaneously so as to cause a movement of the robot for the plurality of joints.

7. The method according to the preceding claim, wherein the virtual robot is generated on the basis of a real robot and a simulator, said simulator being arranged so that each movement of the real robot is able to cause the same movement for the virtual robot, and each movement of the virtual robot is able to cause the same movement for the real robot.

8. A system for editing movements of a robot comprising computing equipment that is designed to communicate with said robot, said system comprising:
- first means for generating a plurality of reference positions of said robot;
- second means for generating a time sequence of positions, which time sequence comprises the plurality of reference positions, the movement of the robot between two reference positions being generated on the basis of an interpolation;
- displacement means (7a, 7b, 7c) designed to cause a displacement of the robot, the displacement means and the robot being interdependent;
said robot comprising a real robot and possibly a virtual robot displayed on a screen of the computing equipment.

9. The system according to claim 8, further comprising third means for generating a reference position of the time sequence of positions on the basis of displacement means included in the computing equipment so as to define the reference position.

10. The system according to claim 9, further comprising fourth means for further generating the reference position by displacing the robot to a required position in order to record, on the computing equipment, the characteristics of the required position, and to define the reference position on the basis of the characteristics of the required position.

11. The system according to any one of claims 8 to 10, comprising means for displaying a graphical representation of the temporal evolution of the characteristics of at least one motor of the robot as a function of the time sequence of positions, means for modifying the graphical representation of the temporal evolution so as to modify the time sequence of positions and means for modifying a new time sequence of positions as a function of the modifications to the graphical representation.

12. The system according to any one of claims 8 to 11, wherein the robot comprises a plurality of joints, and wherein the system comprises means for generating a plurality of time sequences of positions, each of said time sequences of positions comprising reference positions that correspond to the positions of some of the joints among the plurality of joints.

13. The system according to the preceding claim, comprising means for simultaneously reading the time sequences of positions of the plurality of time sequences of positions so as to cause a movement of the robots according to the plurality of joints.

14. A computer program which, when executed, when it is loaded into a computing equipment that is designed to communicate with a robot, allows editing of the movements of the robot according to any one of claims 1 to 7.

## Patentansprüche

1. Verfahren zum Editieren von Bewegungen eines Roboters (1, 6) ausgehend von einer EDV-Ausrüstung (2), die imstande ist, mit dem Roboter zu kommunizieren, wobei das Verfahren Schritte umfasst, bei denen:
- eine Vielzahl von Referenzpositionen (10) des Roboters erzeugt werden,
- mindestens eine zeitliche Positionssequenz (9a, 9b) erzeugt wird, wobei die zeitliche Positionssequenz die Vielzahl von Referenzpositionen (10) umfasst und Übergangsbewegungen (11) zwischen zwei aufeinanderfolgenden Referenzpositionen,
**dadurch gekennzeichnet, dass** der Roboter und Bewegungsmittel (7a, 7b, 7c), die Bestandteil der EDV-Ausrüstung sind und die Bewegung des Roboters bewirken, miteinander verknüpft werden,
und dadurch, dass der Roboter einen realen Roboter und eventuell einen virtuellen Roboter umfasst, der auf einem Bildschirm der EDV-Ausrüstung angezeigt wird.

2. Verfahren nach Anspruch 1, wobei der Schritt, der darin besteht, die Vielzahl von Referenzpositionen zu erzeugen, einen Schritt umfasst, bei dem eine Referenzposition der zeitlichen Positionssequenz von den Bewegungsmitteln (7a, 7b, 7c), die Bestandteil der EDV-Ausrüstung sind, erzeugt wird, wobei die Bewegungsmittel die Bewegung des Roboters bewirken, so dass die Referenzposition bestimmt wird.

3. Verfahren nach Anspruch 2, wobei der Schritt, der darin besteht, die Vielzahl von Referenzositionen zu erzeugen, weiterhin einen Schritt umfasst, bei dem
- die Referenzposition außerdem durch Bewegung des Roboters in eine gewünschte Position erzeugt wird,
- Merkmale der gewünschten Position in der EDV-Ausrüstung aufgezeichnet werden, und
- die Referenzposition ausgehend von den Merkmalen der gewünschten Position bestimmt wird.

4. Verfahren nach einem Anspruch 1 bis 3, wobei der Schritt, der darin besteht, die Vielzahl von Referenzpositionen zu erzeugen, weiterhin einen Schritt umfasst, bei dem:
- eine grafische Darstellung (13) der zeitlichen Entwicklung der Merkmale mindestens eines Gelenks des Roboters in Abhängigkeit von der zeitlichen Positionssequenz angezeigt wird,
- die grafische Darstellung der zeitlichen Entwicklung derart geändert wird, dass die zeitliche Positionssequenz geändert wird,
- eine neue zeitliche Positionssequenz in Abhängigkeit von den Änderungen der grafischen Darstellung erzeugt wird.

5. Verfahren nach einem der vorangehenden Ansprüche, wobei der Roboter eine Vielzahl von Gelenken umfasst, und wobei:
- eine Vielzahl zeitlicher Positionssequenzen (9a, 9b) erzeugt wird, wobei jede der zeitlichen Positionssequenzen Referenzpositionen umfasst, die Positionen eines Teils der Gelenke der Vielzahl der Gelenke entsprechen.

6. Verfahren nach vorangehendem Anspruch, wobei die zeitlichen Positionssequenzen der Vielzahl zeitlicher Positionssequenzen gleichzeitig gelesen werden, so dass eine Bewegung des Roboters für die Vielzahl von Gelenken hervorgerufen wird.

7. Verfahren nach vorangehendem Anspruch, wobei der virtuelle Roboter ausgehend von einem realen Roboter und einem Simulator erzeugt wird, wobei der Simulator derart ausgebildet ist, dass jede Bewegung des realen Roboters imstande ist, dieselbe Bewegung für den virtuellen Roboter hervorzurufen, und jede Bewegung des virtuellen Roboters imstande ist, dieselbe Bewegung für den realen Roboter hervorzurufen.

8. System Editieren von Bewegungen eines Roboters, das eine EDV-Ausrüstung umfasst, die imstande ist, mit dem Roboter zu kommunizieren, wobei das System umfasst,:
- erste Mittel, um eine Vielzahl von Referenzpositionen des Roboters zu erzeugen,
- zweite Mittel, um eine zeitliche Positionssequenz zu erzeugen, wobei die Sequenz die Vielzahl von Referenzpositionen umfasst, wobei die Bewegung des Roboters zwischen zwei Referenzpositionen ausgehend von einer Interpolation erzeugt wird,
- Bewegungsmittel (7a, 7b, 7c), die imstande sind, eine Bewegung des Roboters hervorzurufen, wobei die Bewegungsmittel und der Roboter miteinander verknüpft sind,
wobei der Roboter einen realen Roboter und eventuell einen virtuellen Roboter umfasst, der auf einem Bildschirm der EDV-Ausrüstung angezeigt wird.

9. System nach Anspruch 8, das weiterhin dritte Mittel umfasst, um eine Referenzposition der zeitlichen Positionssequenz ausgehend von den Bewegungsmitteln, die Bestandteil der EDV-Ausrüstung sind, zu erzeugen, um die Referenzposition zu bestimmen.

10. System nach Anspruch 9, das weiterhin vierte Mittel umfasst, um weiterhin die Referenzposition durch Bewegung des Roboters in eine gewünschte Position zu erzeugen, um in der EDV-Ausrüstung die Merkmale der gewünschten Position aufzuzeichnen und um die Referenzposition ausgehend von den Merkmalen der gewünschten Position festzulegen.

11. System nach einem der Ansprüche 8 bis 10, das Mittel umfasst, um eine grafische Darstellung der zeitlichen Entwicklung der Merkmale mindestens eines Motors des Roboters in Abhängigkeit von der zeitlichen Positionssequenz anzuzeigen, Mittel, um die grafische Darstellung der zeitlichen Entwicklung derart zu ändern, dass die zeitliche Positionssequenz geändert wird, und Mittel, um eine neue zeitliche Positionssequenz in Abhängigkeit von den Änderungen der grafischen Darstellung zu ändern.

12. System nach einem der Ansprüche 8 bis 11, wobei der Roboter eine Vielzahl von Gelenken umfasst, und wobei das System Mittel umfasst, um eine Vielzahl zeitlicher Positionssequenzen zu erzeugen, wobei jede der zeitlichen Positionssequenzen Referenzpositionen umfasst, die Positionen eines Teils der Gelenke der Vielzahl der Gelenke entsprechen.

13. System nach vorangehendem Anspruch, das Mittel umfasst, um gleichzeitig die zeitlichen Positionssequenzen der Vielzahl zeitlicher Positionssequenzen derart zu lesen, dass eine Bewegung des Roboters gemäß der Vielzahl von Gelenken hervorgerufen wird.

14. Rechnerprogramm, das bei Ausführung, wenn es auf einer EDV-Ausrüstung installiert ist, die imstande ist, mit einem Roboter zu kommunizieren, das Editieren von Bewegungen des Roboters nach einem der Ansprüche 1 bis 7 erlaubt.
